# EUROPÄISCHE PATENTSCHRIFT

(11) **EP 2 597 305 B1**
(45) Veröffentlichungstag und Bekanntmachung des Hinweises auf die Patenterteilung: **09.03.2016**
(21) Anmeldenummer: 11009302.8
(22) Anmeldetag: 24.11.2011
(51) Int. Cl.: F03D 1/00, F03D 80/40

(54) **Windenergieanlagenrotorblatt mit einem Heizelement und Verfahren zur Herstellung desselben**
Wind energy turbine blade with a heating element and method for producing the same
Pale de rotor d'éolienne dotée d'un élément chauffant et son procédé de fabrication

(43) Veröffentlichungstag der Anmeldung: 29.05.2013
(73) Patentinhaber: Nordex Energy GmbH, 22419 Hamburg (DE)
(72) Erfinder: Löwe, Astrid, 22301 Hamburg (DE); Renschler, Oskar, 22941 Delingsdorf (DE); Rindt, Philipp, 18057 Rostock (DE)
(74) Vertreter: Hauck Patentanwaltspartnerschaft mbB

(56) Entgegenhaltungen:
- WO-A1-00/79128
- WO-A1-2011/127995
- WO-A1-2011/127997
- GB-A- 2 121 745
- GB-A- 2 319 942
- US-B1- 7 157 663

## Beschreibung

Die vorliegende Erfindung betrifft ein Windenergieanlagenrotorblatt mit einer Blattwurzel, einer Blattspitze, zwei miteinander verbundenen Rotorblatthalbschalen, die ein faserverstärktes Kunststoffmaterial aufweisen, und einem elektrischen Heizelement, wobei das Heizelement an einer Außenseite des Rotorblattes angeordnet ist und ein blattwurzelseitiges Ende und ein blattspitzenseitiges Ende aufweist und das blattspitzenseitige Ende über eine zur Blattwurzel führende, elektrische Leitung angeschlossen ist. Ferner betrifft die Erfindung ein Verfahren zur Herstellung eines solchen Windenergieanlagenrotorblattes.

Windenergieanlagen werden bevorzugt an Standorten mit hohen und möglichst konstanten Windgeschwindigkeiten errichtet. Oftmals herrschen an diesen Standorten geringe Temperaturen, so dass sich bei bestimmten Wetterlagen Eis an den Rotorblättern einer Windenergieanlage bilden kann. Der Ansatz von Eis an den Rotor-blättern beeinträchtigt den Betrieb der Windenergieanlage. Daher werden in kalten Regionen oftmals Eiswarn- oder Enteisungssysteme verwendet.

Ein Eiswarnsystem sorgt dafür, dass die Windenergieanlage bei entsprechenden Wetterbedingungen vorbeugend abgeschaltet wird. Dies hat Ertragseinbußen zur Folge.

Ein Enteisungssystem verhindert, dass sich Eiskristalle an den Rotorblättern bilden. Somit ermöglicht ein Enteisungssystem, die Windenergieanlage weiterhin in Betrieb zu lassen und die Ertragseinbußen zu reduzieren oder sogar zu vermeiden.

Aus dem Stand der Technik ist bekannt, Heizelemente an der Außenfläche der Rotorblätter einer Windenergieanlage zu installieren. Heizelemente werden bevorzugt in Bereichen nahe der Blattmitte bis hin zur Rotorblattspitze installiert, wo die Bildung von Eiskristallen die aerodynamische Wirksamkeit der Windenergieanlagenrotorblätter beeinträchtigt und damit störend ist. Solche Heizelemente werden mittels elektrischer Leitungen, die ausgehend von den Heizelementen zur Rotorblattwurzel führt, an die Windenergieanlage angeschlossen, wobei die elektrischen Leitungen aus gewöhnlichen Kabeln bestehen.

Nachteilig bei gewöhnlichen Kabeln ist, dass diese im Laufe der Zeit durch die Bewegung und fortlaufende Erschütterungen der Windenergieanlagenrotorblätter beschädigt werden können. Die Reparatur solcher beschädigten Kabel einer Windenergieanlage ist aufwendig und insbesondere nahe der Rotorblattspitze aufgrund des geringen Bauraums fast unmöglich. Aus der Druckschrift WO 00/79128 A1 ist ein Windenergieanlagenrotorblatt mit mehreren um die Profilnasenkante herum angeordneten Heizelementen bekannt geworden. Die Heizelemente werden über einen ersten und einen zweiten elektrischen Leiter mit Strom versorgt. Die elektrischen Leiter können auf der Außenseite des Rotorblatts angeordnet oder in eine Wandung des Rotorblatts eingebettet sein. Sie bestehen vorzugsweise aus Metall oder auch aus Kohlenstofffasern.

Aus der Druckschrift US 7,157,663 B1 ist ein Rotorblatt für einen Hubschrauber mit Heizelementen aus leitfähigen Fasern bekannt geworden. Die Heizelemente sind elektrisch angeschlossen über eine Leitung, die einen ersten Abschnitt und einen zweiten Abschnitt aufweist. Der erste Abschnitt erstreckt sich in Längsrichtung des Rotorblatts. Der zweite Abschnitt weist einen geflochtenen Leiter auf.

Davon ausgehend liegt der vorliegenden Erfindung die Aufgabe zugrunde, ein Windenergieanlagenrotorblatt mit einem Heizelement zur Verfügung zustellen, das weniger reparaturanfällig ist.

Diese Aufgabe wird durch ein Windenergieanlagenrotorblatt mit den Merkmalen des Anspruchs 1 und ein Verfahren zur Herstellung eines solchen Windenergieanlagenrotorblattes gemäß Anspruch 13 gelöst. Bevorzugte Ausgestaltungen der Erfindung sind in den sich jeweils anschließenden Unteransprüchen angegeben.

Die vorliegende Erfindung betrifft ein Windenergieanlagenrotorblatt mit einer Blattwurzel, einer Blattspitze, zwei miteinander verbundenen Rotorblatthalbschalen, die ein faserverstärktes Kunststoffmaterial aufweisen, und einem elektrischen Heizelement, das an einer Außenseite des Rotorblattes angeordnet ist und ein blattwurzelseitiges Ende und ein blattspitzenseitiges Ende aufweist, wobei das blattspitzenseitige Ende über eine zur Blattwurzel führende, elektrische Leitung angeschlossen ist und wobei mindestens ein erster Abschnitt der elektrischen Leitung, der an einer Innenseite einer der Rotorblatthalbschalen angeordnet ist, von einem flächigen Kohlenstofffasermaterial gebildet ist.

Die zwei miteinander verbundenen Rotorblatthalbschalen weisen ein faserverstärktes Kunststoffmaterial auf, wie beispielsweise glasfaserverstärkten Kunststoff.

Das elektrische Heizelement ist an einer Außenseite des Windenergieanlagenrotorblattes angeordnet und weist ein blattwurzelseitiges Ende und ein blattspitzenseitiges Ende auf. Das Heizelement ist so angeordnet, dass es im Betrieb einen Bereich des Windenergieanlagenrotorblattes erwärmen kann, um dadurch die Bildung von Eiskristallen oder die Ablagerung größerer Eismengen zu verhindern. Das Heizelement kann zum Beispiel einen Widerstandsdraht aufweisen, zum Beispiel aus Kupfer oder anderen geeigneten Metallen oder einer Metalllegierung wie Konstantan, Manganin, Isotan oder einer ähnlichen geeigneten Legierung. Alternativ kann das Heizelement aus kohlenstofffaserverstärktem Kunststoff (CFK) bestehen.

Das blattspitzenseitige Ende des elektrischen Heizelements ist über eine zur Blattwurzel führende, elektrische Leitung an eine elektrische Energiequelle angeschlossen. Die elektrische Energiequelle kann insbesondere in einer Gondel der Windenergieanlage angeordnet und über einen Schleifring mit dem Rotor und einem blattwurzelseitigen Ende der elektrischen Leitung verbunden sein. Dabei ist die elektrische Leitung von einer Außenseite zu einer Innenseite des Windenergieanlagenrotorblattes geführt. Das blattwurzelseitige Ende des Heizelements kann über eine weitere elektrische Leitung angeschlossen sein, die ebenfalls zur Blattwurzel geführt wird und ganz oder teilweise an einer Innenseite des Windenergieanlagenrotorblattes angeordnet sein kann.

Mindestens ein erster Abschnitt der elektrischen Leitung, der an einer Innenseite einer der Rotorblatthalbschalen angeordnet ist, ist aus einem Kohlenstofffasermaterial gebildet. Das Kohlenstofffasermaterial besteht im Wesentlichen aus Kohlenstofffasern. Es kann insbesondere ein Gewebe oder ein sonstiges textiles Material sein, insbesondere in Streifenform. Es kann sich um ein zur Herstellung von kohlenstofffaserverstärkten Kunststoffen vorgesehenes oder geeignetes Fasermaterial handeln. Das Kohlenstofffasermaterial ist flächig und kann eine Dicke von beispielsweise 1,0 mm oder weniger oder 0,5 mm oder weniger oder nur 0,25 mm oder weniger aufweisen. Eine zusätzliche Heizwirkung durch das Kohlenstofffasermaterial ist unter Umständen ein erwünschter Nebeneffekt.

Der das Kohlenstofffasermaterial aufweisende erste Abschnitt kann in das Laminat der Rotorblatthalbschale integriert oder an der Innenseite des Windenergieanlagenrotorblattes aufgeklebt sein. Er ist dauerhaft an der Rotorblatthalbschale fixiert und kann bei Bewegung des Windenergieanlagenrotorblattes nicht verrutschen. Infolgedessen wird die Lebensdauer dieses Abschnittes der elektrischen Leitung erhöht, auch bei starken Schwingungen und Biegung des Rotorblatts. Hierzu trägt bei, dass das Kohlenstofffasermaterial ähnliche Elastizitätseigenschaften aufweist, wie das Material der Rotorblatthalbschale. Das Kohlenstofffasermaterial kann daher den im Betrieb auftretenden Verformungen der Rotorblatthalbschale folgen, ohne selbst beschädigt oder von der Rotorblatthalbschale gelöst zu werden.

Gemäß einer Ausgestaltung erstreckt sich der erste Abschnitt in Richtung zu der Blattwurzel hin bis zu einer Längsposition des Windenergieanlagenrotorblattes, an der die Profildicke des Windeenergieanlagenrotorblattes mindestens 20 cm beträgt, Die Profildicke des Windeenergieanlagenrotorblattes kann dort auch mindestens 30 cm, 50 cm, 60 cm, 70 cm, 80 cm, 90cm oder 1 m betragen. Bevorzugt erstreckt sich der erste Abschnitt bis zu einer Profildicke, in der das Servicepersonal bequem den Anschluss des ersten Abschnittes an einen sich anschließenden Abschnitt der elektrischen Leitung prüfen kann. Dies hat den Vorteil, dass Überprüfungen der Anlage und notwendige Reparaturen weniger aufwendig und somit kostengünstiger werden, da das Servicepersonal problemlos auf diese Anschlussstelle zugreifen kann.

Gemäß einer Ausgestaltung ist ein zweiter Abschnitt der elektrischen Leitung an der Außenseite des Rotorblatts angeordnet und aus einem Kohlenstofffasermaterial gebildet, wobei ein Bereich des zweiten Abschnittes das blattspitzenseitige Ende des Heizelements berührt. Durch die Berührung wird ein unmittelbarer elektrischer Kontakt hergestellt. Der zweite Abschnitt und das Heizelement können beispielsweise aneinander angrenzen, so dass ein unmittelbarer elektrischer Kontakt entsteht. Bevorzugt überlappen sich der zweite Abschnitt und das Heizelement in einem Bereich. In dem Überlappungsbereich liegt das Heizelement auf dem zweiten Abschnitt und/oder der zweite Abschnitt auf dem Heizelement. Alternativ können zwischen dem zweiten Abschnitt und dem Heizelement Mittel zur Verbesserung der Leitfähigkeit, wie zum Beispiel ein elektrisch leitendes Gewebe oder Metallplatten oder Metalldrähte oder Metallspäne angeordnet sein.

Gemäß einer Ausgestaltung ist ein Bereich des zweiten Abschnitts um das Heizelement herumgeführt, so dass er eine Unterseite und eine Oberseite des Heizelements berührt. Bevorzugt ist das Heizelement in dem Überlappungsbereich vollständig vom zweiten Abschnitt umwickelt, so dass Unterseite und Oberseite des Heizelements im Überlappungsbereich vom zweiten Abschnitt bedeckt sind.

Gemäß einer Ausgestaltung sind der erste Abschnitt und der zweite Abschnitt von einem durchgängigen Materialstreifen gebildet, der von der Innenseite zur Außenseite verläuft. Beispielsweise kann der Materialstreifen an der Hinterkante des Rotorblatts zwischen den beiden Rotorblatthalbschalen oder durch eine Ausnehmung in einer Wandung einer der Rotorblatthalbschalen hindurch von innen nach außen geführt sein. Alternativ können der erste und der zweite Abschnitt aus zwei miteinander verbundenen Materialstreifen bestehen.

Gemäß einer Ausgestaltung ist der Materialstreifen über eine Kante, bevorzugt über die Hinterkante, einer der Rotorblatthalbschalen umgelenkt. Ferner kann der Materialstreifen auf der Außenseite im Wesentlichen in Richtung der Profiltiefe des Windenergieanlagenrotorblattes verlaufen, oder auch in einem Winkel zwischen 0° und 90° zu dieser.

Gemäß einer Ausgestaltung ist das Kohlenstofffasermaterial in eine Kunststoffmatrix eingebettet. Als Basis der Kunststoffmatrix können Duroplasten wie beispielsweise Epoxydharz verwendet werden. Diese Einbettung des Kohlenstofffasermaterials hat den Vorteil, dass das Kohlenstofffasermaterial dauerhaft fixiert ist, nicht verrutschen kann und auch durch Erschütterungen nicht beschädigt werden kann.

Gemäß einer Ausgestaltung ist das Kohlenstofffasermaterial und/oder das Heizelement mit einer Schutzschicht überzogen. Die Schutzschicht kann ein elektrisch isolierendes Polymer oder ein anderer Faserverbundwerkstoff sein. Bevorzugt ist die Schutzschicht ein glasfaserverstärkter Kunststoff.

Gemäß einer Ausgestaltung ist der erste Abschnitt und/oder der zweite Abschnitt an eine der Rotorblatthalbschalen laminiert oder geklebt. Beim Laminieren verbinden sich der kunststoffdurchtränkte erste beziehungsweise zweite Abschnitt und eine der Rotorblatthalbschalen fest miteinander. Insbesondere kann das Kohlenstofffasermaterial des ersten Abschnittes und/oder des zweiten Abschnittes trocken auf die betreffende Rotorblatthalbschale aufgelegt und anschließend, z.B. mit einer Rolle oder Walze, mit einem flüssigen Kunststoffmaterial durchtränkt werden. Es kann auch im bereits durchtränkten Zustand auf die Halbschale aufgebracht werden. Ebenso kann das Heizelement auf einer Außenseite der Rotorblatthalbschalen laminiert oder geklebt sein, so dass diese Elemente des Windenergieanlagenrotorblattes ebenfalls einfach und dauerhaft fixiert und vor einem Verrutschen geschützt sind und damit nicht durch Bewegung beschädigt werden können.

Gemäß einer Ausgestaltung ist mindestens ein zweites Heizelement neben dem einen Heizelement auf der Außenseite des Windenergieanlagenrotorblattes angeordnet. Die Heizelemente können sich auf einer Seite des Rotorblatts befinden. Alternativ befindet sich jeweils mindestens ein Heizelement auf jeder Seite des Rotorblatts. Die beiden Heizelemente sind so angeordnet, dass der zweite Abschnitt eine Unterseite und eine Oberseite der Heizelemente berührt. Beispielsweise kann ein Bereich des zweiten Abschnittes um beide Heizelemente herumgeführt sein. Ebenso können beide Heizelemente in einem Bereich überlappen, indem der zweite Abschnitt um beide Heizelemente herumgeführt ist. Ebenso denkbar ist, dass beide Heizelemente ihrer Länge nach einen spitzen Winkel einschließen, so dass sie ebenfalls einen Überlappungsbereich aufweisen, um den der zweite Abschnitt herumgeführt ist.

Gemäß einer Ausgestaltung besitzen das oder die Heizelemente einen höheren ohmschen Widerstand pro Länge als das Kohlenstofffasermaterial des ersten und/oder zweiten Abschnitts. Ferner können die Heizelemente voneinander verschiedene ohmsche Widerstände pro Länge aufweisen, wobei die abgegebene Wärme durch den ohmschen Widerstand pro Länge beeinflusst wird. Damit kann das Heizvermögen im Bereich der beiden Heizelemente ohne aufwendige elektrische Steuerungsmaßnahmen gezielt unterschiedlich ausgeführt werden.

Gemäß einer Ausgestaltung ist ein metallischer Leiter in einer Wandung einer der Rotorblatthalbschalen - angeordnet, der den ersten Abschnitt und den zweiten Abschnitt miteinander verbindet. Der metallische Leiter kann als ein massiver Block, insbesondere als ein Bolzen oder als ein scheibenförmiger Köper, oder als ein beliebig geformter sonstiger Leiter ausgebildet sein. Der metallische Leiter dient als Übergang der elektrischen Leitung von der Innenseite zur Außenseite der Rotorblatthalbschale bzw. als Verbindung zwischen dem ersten Abschnitt und dem zweiten Abschnitt.

Ferner betrifft die Erfindung ein Verfahren mit den Merkmalen des Anspruchs 13 zum Herstellen eines Windenergieanlagenrotorblattes mit einem elektrischen Heizelement, wobei das Verfahren die folgenden Schritte umfasst:
- Herstellen einer Rotorblatthalbschale, die ein faserverstärktes Kunststoffmaterial aufweist,
- Anordnen einer elektrischen Leitung, die von einer Außenseite der Rotorblatthalbschale zu einer Blattwurzel führt, wobei mindestens ein erster Abschnitt der elektrischen Leitung von einem Kohlenstofffasermaterial gebildet ist und an einer Innenseite der Rotorblatthalbschale angeordnet wird,
- Verbinden der Rotorblatthalbschale mit einer weiteren Rotorblatthalbschale, die ein faserverstärktes Kunststoffmaterial aufweist,
- Anordnen eines elektrischen Heizelements an einer Außenseite des Windenergieanlagenrotorblattes, wobei das Heizelement ein blattwurzelseitiges Ende und ein blattspitzenseitiges Ende aufweist,
- Herstellen eines elektrischen Kontaktes zwischen dem blattspitzenseitigen Ende des Heizelementes und der elektrischen Leitung.

Das Verfahren ist insbesondere zur Herstellung eines Windenergieanlagenrotorblattes mit den Merkmalen des Anspruchs 1 geeignet. Zur Erläuterung der Verfahrensmerkmale wird auf die obigen Erläuterungen der korrespondierenden Merkmale des Windenergieanlagenrotorblattes verwiesen, die entsprechend gelten. Es versteht sich, dass die einzelnen Verfahrensschritte auch in abweichender Reihenfolge ausgeführt werden können.

Zur Herstellung einer Rotorblatthalbschale wird ein Fasermaterial in eine Form gelegt oder die Form damit ausgelegt. Anschließend wird die mit Fasermaterial ausgelegte Form für ein Vakuuminfusionsverfahren vorbereitet, d.h. insbesondere luftdicht verschlossen, etwa mit einer Vakuumfolie. Bei der Vakuuminfusion wird in der Form ein Unterdruck erzeugt und flüssiger Kunststoff in die Form geleitet, wodurch das in der Form angeordnete Fasermaterial mit dem flüssigen Kunststoff durchtränkt wird. Nach dem Aushärten weist die Rotorblatthalbschale im Wesentlichen ihre endgültige Form auf.

Das Anordnen einer elektrischen Leitung, die von einer Außenseite der Rotorblatthalbschale zu einer Blattwurzel führt, kann vor oder nach Anwendung des Vakuuminfusionsverfahrens, d.h. vor oder nach dem Aushärten der Rotorblatthalbschale, erfolgen. Der mindestens eine erste Abschnitt der elektrischen Leitung, der von einem Kohlenstofffasermaterial gebildet ist, wird an einer Innenseite der Rotorblatthalbschale angeordnet.

Die hergestellte Rotorblatthalbschale wird im Anschluss daran mit einer weiteren Rotorblatthalbschale, die auch ein faserverstärktes Kunststoffmaterial aufweist, verbunden, insbesondere durch Verkleben.

Das Anordnen des elektrischen Heizelementes an einer Außenseite des Windenergieanlagenrotorblattes kann vor oder nach dem Aushärten der Rotorblatthalbschale erfolgen. Das Heizelement weist ein blattwurzelseitiges Ende und ein blattspitzenseitiges Ende auf.

Bevorzugt wird ein elektrischer Kontakt zwischen dem blattspitzenseitigen Ende des Heizelements und der elektrischen Leitung hergestellt.

Gemäß einer weiteren Ausgestaltung des Verfahrens wird die Rotorblatthalbschale in einem Vakuuminfusionsverfahren in einer Form hergestellt und das Heizelement und/oder der erste Abschnitt gemeinsam mit weiteren Fasermaterialien der Rotorblatthalbschalen in die Form eingelegt und mit einem flüssigen Kunststoffmaterial durchtränkt. Dadurch, dass das Heizelement und/oder der erste Abschnitt gemeinsam mit den Fasermaterialien der Rotorblatthalbschale in die Form eingelegt werden, kann das Heizelement und/oder der erste Abschnitt fest mit der Rotorblatthalbschale verbunden werden. Beschädigungen durch Erschütterungen des fertigen Windenergieanlagenrotorblattes im Betrieb können somit vermieden werden.

Gemäß einer weiteren Ausgestaltung des Verfahrens wird die Rotorblatthalbschale in einem Vakuuminfusionsverfahren vorgefertigt und das Heizelement und/oder der erste Abschnitt auf die ausgehärtete Rotorblatthalbschale aufgelegt und mit einem flüssigen Kunststoffmaterial durchtränkt.

Ein Ausführungsbeispiel der Erfindung wird unter Bezugnahme auf die Figuren 1 bis 4 näher erläutert. Es zeigen:
- Fig. 1: eine Ansicht zweier Rotorblatthalbschalen mit einem Kohlenstofffasermaterial,
- Fig. 2: eine Ansicht des Rotorblatts mit miteinander verbundenen Rotorblatthalbschalen gemäß Fig. 1,
- Fig. 3: eine Ansicht der Installationsreihenfolge von Heizelement und einem Kohlenstofffasermaterial,
- Fig. 4: eine Ansicht eines fertig installierten Heizelementes und eines Kohlenstofffasermaterials,
- Fig. 5: einen Querschnitt entlang der in Fig. 4 mit A-A bezeichneten Ebene.

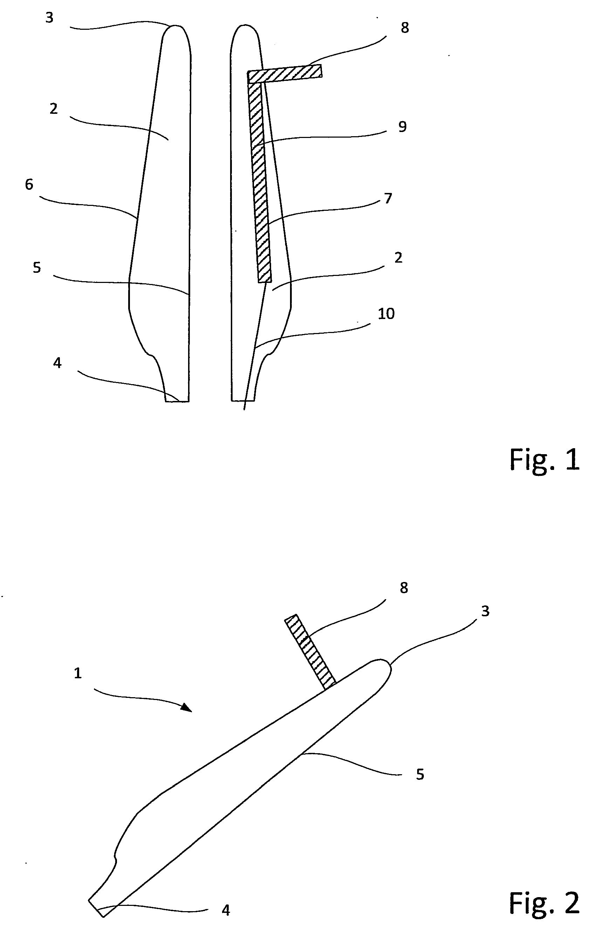

Figur 1 zeigt die Innenseiten von zwei noch nicht miteinander verbundenen, nebeneinander liegende Rotorblatthalbschalen 2, jeweils mit einer Blattspitze 3, einer Nasenkante 5, einer Blattwurzel 4 und einer Hinterkante 6. Ein elektrisch leitfähiges Kohlenstofffasermaterial 9 weist einen ersten Abschnitt 7 auf, der auf der Innenseite der Rotorblatthalbschale 2 angeordnet ist, und einen zweiten Abschnitt 8, der von der Innenseite der Rotorblatthalbschale 2 hinaus führt und in dem in der Figur 1 gezeigten Zustand nach außen über die Rotorblatthalbschale 2 übersteht. Der erste Abschnitt 7 verläuft parallel zur Nasenkante 5. Wie in Figur 1 dargestellt, ist das Kohlenstofffasermaterial 9 einteilig ausgebildet, in Form eines Materialstreifens.

Ferner ist in Figur 1 eine elektrische Leitung 10 gezeigt, die an ein blattwurzelseitiges Ende des ersten Abschnittes 7 angeschlossen ist. Sie dient zur Verbindung mit einer elektrischen Energiequelle innerhalb einer nicht dargestellten Gondel der Windenergieanlage und kann beispielsweise aus einem gewöhnlichen Kabel bestehen.

Der erste Abschnitt 7 erstreckt sich in Richtung zu der Blattwurzel 4 hin bis zu einer Längsposition des Windenergieanlagenrotorblattes 1, an der die Profildicke des Windenergieanlagenrotorblattes 1 mindestens 20 cm beträgt.

Figur 2 zeigt ein Windenergieanlagenrotorblatt 1, nachdem die beiden Rotorblatthalbschalen 2 gemäß Figur 1 miteinander verklebt worden sind. Der zweite Abschnitt 8 des Kohlenstofffasermaterials 9 führt an der Hinterkante 6 nahe der Blattspitze 3 zwischen den Rotorblatthalbschalen 2 hinaus nach außen.

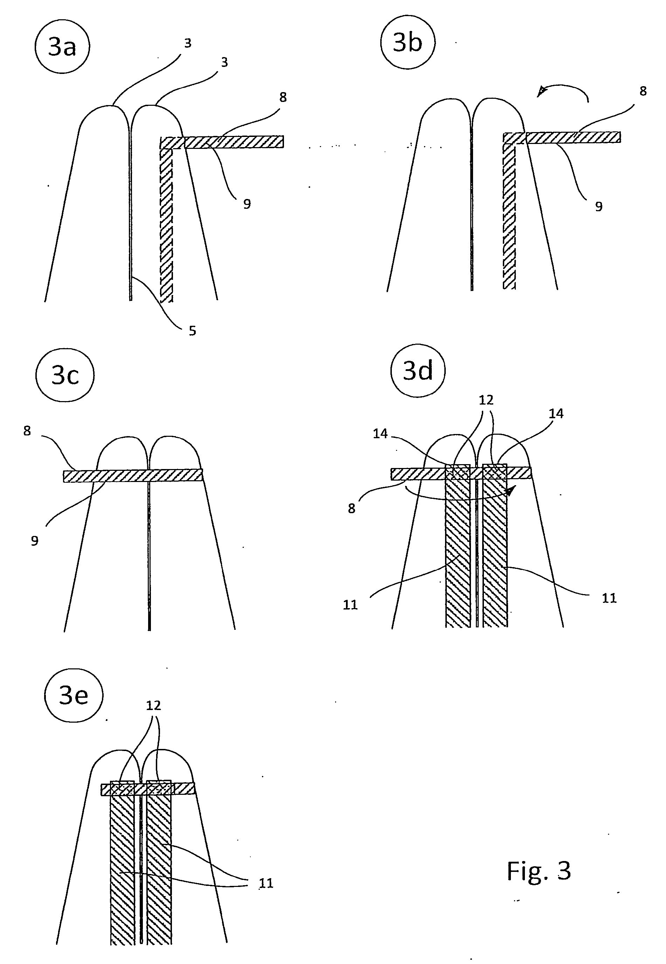

Anhand der Figur 3 wird die Herstellung des Rotorblatts erläutert. In den Teilfiguren 3a bis 3e der Figur 3 sind schematisch einige Verfahrensschritte dargestellt. Die Figur 3 zeigt die Außenseite der blattspitzenseitigen Bereiche der Rotorblatthalbschalen. Diese sind zur Veranschaulichung wie in der Figur 1 nebeneinander angeordnet. Die blattwurzelnahen Bereiche der Rotorblatthalbschalen 2 sind nicht dargestellt. Bei der Herstellung des Windenergieanlagenrotorblattes 1 gemäß Figur 3 sind die Rotorblatthalbschalen 2 tatsächlich bereits miteinander verklebt.

Gemäß Figur 3a weist der zweite Abschnitt 8 des Kohlenstofffasermaterials 9 über die Rotorblatthalbschale 2 nach außen. In Figur 3b und 3c wird der überstehende zweite Abschnitt 8 des Kohlenstofffasermaterials 9 nahe der Blattspitze 3 um die Außenseite des Windenergieanlagenrotorblattes 1 geführt (angedeutet in Figur 3b durch den Pfeil).

Gemäß Figur 3d werden zwei Heizelemente 11 parallel zur Nasenkante 5 nebeneinander auf der Außenseite je einer Rotorblatthalbschale 2 angeordnet, so dass zwei Überlappungsbereiche 12 entstehen, jeweils zwischen einem blattspitzenseitigen Ende 14 eines Heizelements 11 an und dem zweiten Abschnitt 8 des faserverstärkten Kunststoffmaterials 9. Gemäß Fig. 3e wird der zweite Abschnitt 8 des faserverstärkten Kunststoffmaterials 9 ein zweites Mal um die Außenseite über die Heizelemente 11 hinweg geführt, so dass je ein Heizelement 11 und der zweite Abschnitt 8 in den Überlappungsbereichen 12 ein zweites Mal übereinander angeordnet sind.

Auf diese Weise berührt der zweite Abschnitt 8 sowohl eine Unterseite als auch eine Oberseite jedes Heizelements 11.

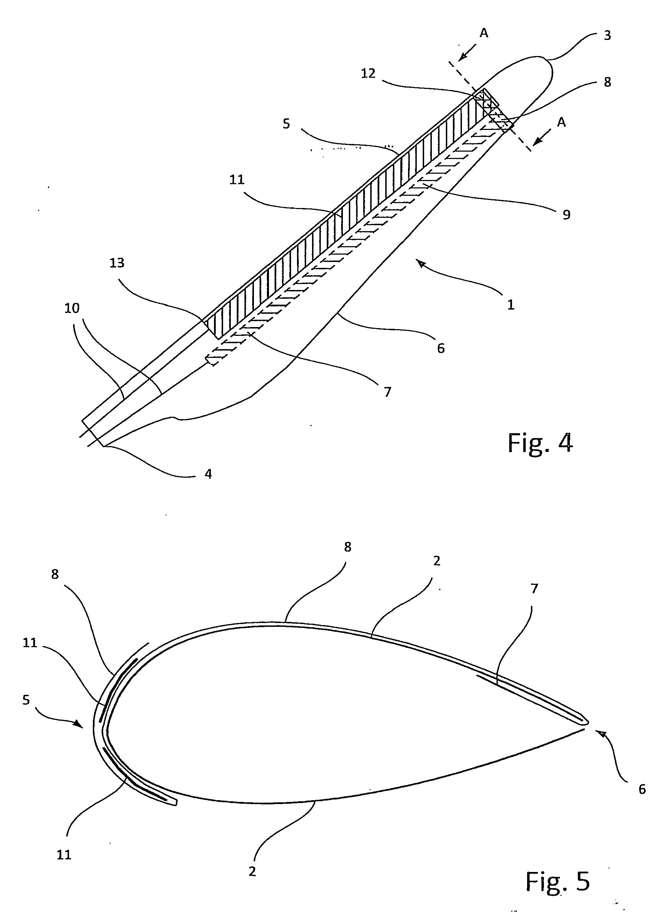

Figur 4 zeigt eine Außenansicht eines Windenergieanlagenrotorblattes 1 mit einem auf einer Innenseite des Windenergieanlagenrotorblattes 1 angeordneten Kohlenstofffasermaterial 9 (gestrichelt dargestellt) und einem Heizelement 11 auf der Außenseite des Windenergieanlagenrotorblattes 1. In einem geringen Abstand von der Blattspitze 3 nahe der Nasenkante 5 überlappen sich der zweite Abschnitt 8 des Kohlenstofffasermaterials 9 und blattspitzenseitigen Ende 14 des Heizelements 11 in einem Überlappungsbereich 12. An den blattwurzelseitigen Enden 13 des Heizelementes 11 und des Kohlenstofffasermaterials 9 sind elektrische Leitungen 10 angeordnet, die zu einer elektrischen Energiequelle führen, die insbesondere in einer Gondel der Windenergieanlage angeordnet sein kann und über einen Schleifring mit dem Rotor und dem blattwurzelseitigen Ende der elektrischen Leitung verbunden ist (nicht dargestellt).

Der erste Abschnitt 7 des Kohlenstofffasermaterials 9 befindet sich an der Innenseite einer der Rotorblatthalbschalen 2 und verläuft ebenfalls im Wesentlichen parallel zur Nasenkante 5.

Figur 5 zeigt einen Querschnitt entlang der Ebene A-A aus Figur 4 in einer schematischen Darstellung. Erkennbar sind die beiden entlang der Nasenkante 5 und Hinterkante 6 miteinander verbundenen Rotorblatthalbschalen 2 aus einem faserverstärkten Kunststoffmaterial. Auf der Außenseite des Windenergieanlagenrotorblattes 1 erstreckt sich in dem gewählten Querschnitt der zweite Abschnitt 8 des Kohlenstofffasermaterials 9. Im Bereich der Nasenkante 5 ist der zweite Abschnitt 8 um das Heizelement 11 herumgeführt, so dass er dessen Oberseite und Unterseite berührt. Außerdem ist der zweite Abschnitt 8 um eine hintere Kante einer der Rotorblatthalbschalen 2 umgelenkt und zwischen den beiden Rotorblatthalbschalen in das Innere des Windenergieanlagenrotorblattes 1 hineingeführt, wo er in den ersten Abschnitt 7 übergeht. Der erste Abschnitt verläuft auf der Innenseite einer der Rotorblatthalbschalen 2.

### Bezugszeichenliste:

- 1: Windenergieanlagenrotorblatt
- 2: Rotorblatthalbschale
- 3: Blattspitze
- 4: Blattwurzel
- 5: Nasenkante
- 6: Hinterkante
- 7: erster Abschnitt
- 8: zweiter Abschnitt
- 9: Kohlenstofffasermaterial
- 10: Elektrische Leitung
- 11: Heizelement
- 12: Überlappungsbereich
- 13: blattwurzelseitiges Ende
- 14: blattspitzenseitiges Ende

## Patentansprüche

1. Windenergieanlagenrotorblatt (1) mit einer Blattwurzel (4), einer Blattspitze (3) und einem elektrischen Heizelement (11), das an einer Außenseite des Windenergieanlagenrotorblattes (1) angeordnet ist und ein blattwurzelseitiges Ende (13) und ein blattspitzenseitiges Ende (14) aufweist, **gekennzeichnet durch** zwei miteinander verbundene Rotorblatthalbschalen (2), die ein faserverstärktes Kunststoffmaterial aufweisen, und **dadurch**, dass das blattspitzenseitige Ende (14) über eine zur Blattwurzel (4) führende, elektrische Leitung angeschlossen ist, wobei ein erster Abschnitt (7) der elektrischen Leitung (10) an einer Innenseite einer der Rotorblatthalbschalen (2) angeordnet und von einem flächigen Kohlenstofffasermaterial (9) gebildet ist.

2. Windenergieanlagenrotorblatt (1) nach Anspruch 1, **dadurch gekennzeichnet, dass** der erste Abschnitt (7) sich in Richtung zu der Blattwurzel (4) hin bis zu einer Längsposition des Windenergieanlagenrotorblattes (1) erstreckt, an der die Profildicke des Windenergieanlagenrotorblattes (1) mindestens 20 cm beträgt.

3. Windenergieanlagenrotorblatt (1) nach Anspruch 1 oder 2, **dadurch gekennzeichnet, dass** ein zweiter Abschnitt (8) der elektrischen Leitung (10), der an der Außenseite des Windenergieanlagenrotorblattes (1) angeordnet ist, von einem Kohlenstofffasermaterial (9) gebildet ist, wobei ein Bereich des zweiten Abschnitts (8) das blattspitzenseitige Ende (14) des Heizelements (11) berührt.

4. Windenergieanlagenrotorblatt (1) nach Anspruch 3, **dadurch gekennzeichnet, dass** ein Bereich des zweiten Abschnittes (8) um das Heizelement (11) herumgeführt ist, so dass er eine Unterseite und eine Oberseite des Heizelementes (11) berührt.

5. Windenergieanlagenrotorblatt (1) nach einem der Ansprüche 3 oder 4, **dadurch gekennzeichnet, dass** der erste Abschnitt (7) und der zweite Abschnitt (8) von einem durchgängigen Materialstreifen gebildet sind, der von der Innenseite zur Außenseite verläuft.

6. Windenergieanlagenrotorblatt (1) nach Anspruch 3 bis 5, **dadurch gekennzeichnet, dass** der zweite Abschnitt (8) über eine Kante einer der Rotorblatthalbschalen (2) umgelenkt ist.

7. Windenergieanlagenrotorblatt (1) nach einem der Ansprüche 1 bis 6, **dadurch gekennzeichnet, dass** das Kohlenstofffasermaterial (9) in eine Kunststoffmatrix eingebettet ist.

8. Windenergieanlagenrotorblatt (1) nach einem der Ansprüche 1 bis 7, **dadurch gekennzeichnet, dass** das Kohlenstofffasermaterial (9) und/oder das Heizelement (11) mit einer Schutzschicht überzogen ist.

9. Windenergieanlagenrotorblatt (1) nach einem der Ansprüche 1 bis 8, **dadurch gekennzeichnet, dass** der erste Abschnitt (7) und/oder der zweite Abschnitt (8) an eine der Rotorblatthalbschalen (2) laminiert oder geklebt ist.

10. Windenergieanlagenrotorblatt (1) nach einem der Ansprüche 3 bis 9, **dadurch gekennzeichnet, dass** mindestens ein zweites Heizelement (11) neben dem einen Heizelement (11) auf der Außenseite des Windenergieanlagenrotorblattes (1) angeordnet ist, so dass der zweite Abschnitt (8) eine Unterseite und eine Oberseite dieser beiden Heizelemente (11) berührt.

11. Windenergieanlagenrotorblatt (1) nach einem der Ansprüche 1 bis 10, **dadurch gekennzeichnet, dass** das oder die Heizelemente (11) einen höheren ohmschen Widerstand pro Länge aufweisen als das Kohlenstofffasermaterial (9).

12. Windenergieanlagenrotorblatt (1) nach einem der Ansprüche 1 bis 4 oder 7 bis 11, **dadurch gekennzeichnet, dass** ein metallischer Leiter in einer Wandung einer der Rotorblatthalbschalen (2) angeordnet ist, der den ersten Abschnitt (7) und den zweiten Abschnitt (8) miteinander verbindet.

13. Verfahren zum Herstellen eines Windenergieanlagenrotorblattes (1) mit einem elektrischen Heizelement (11), wobei das Verfahren die folgenden Schritte umfasst:
• Herstellen einer Rotorblatthalbschale (2), die ein faserverstärktes Kunststoffmaterial aufweist,
• Anordnen einer elektrischen Leitung, die von einer Außenseite der Rotorblatthalbschale (2) zu einer Blattwurzel (4) führt, wobei mindestens ein erster Abschnitt (7) der elektrischen Leitung von einem flächigen Kohlenstofffasermaterial (9) gebildet ist und an einer Innenseite der Rotorblatthalbschale (2) angeordnet wird,
• Verbinden der Rotorblatthalbschale (2) mit einer weiteren Rotorblatthalbschale (2), die ein faserverstärktes Kunststoffmaterial aufweist,
• Anordnen eines elektrischen Heizelements (11) an einer Außenseite des Windenergieanlagenrotorblattes (1), wobei das Heizelement (11) ein blattwurzelseitiges Ende (13) und ein blattspitzenseitiges Ende (14) aufweist,
• Herstellen eines elektrischen Kontakts zwischen dem blattspitzenseitigen Ende (14) des Heizelements (11) und der elektrischen Leitung.

14. Verfahren nach Anspruch 13, **dadurch gekennzeichnet, dass** die Rotorblatthalbschale (2) in einem Vakuuminfusionsverfahren in einer Form hergestellt wird und das Heizelement (11) und/oder der erste Abschnitt (7) gemeinsam mit weiteren Fasermaterialien der Rotorblatthalbschalen (2) in die Form eingelegt und mit einem flüssigen Kunststoffmaterial durchtränkt wird.

15. Verfahren nach Anspruch 13, **dadurch gekennzeichnet, dass** die Rotorblatthalbschale (2) in einem Vakuuminfusionsverfahren vorgefertigt und das Heizelement (11) und/oder der erste Abschnitt (7) auf eine der ausgehärteten Rotorblatthalbschalen (2) aufgelegt und mit einem flüssigen Kunststoffmaterial durchtränkt wird.

## Claims

1. A wind turbine rotor blade (1) having a blade root (4), a blade tip (3), and an electrical heating element (11), which is arranged on an outer side of the wind turbine rotor blade (1) and has a blade root end (13) and a blade tip end (14), **characterized by** two interconnected rotor blade half shells (2), which include a fiber-reinforced plastics material and **characterized in that** the blade tip end (14) is connected via an electrical line leading to the blade root (4), wherein a first section (7) of the electrical line (10) is arranged on an inner side of one of the rotor blade half shells (2) and is made of a flat carbon fiber material (9).

2. The wind turbine rotor blade (1) according to claim 1, **characterized in that** the first section (7) extends in the direction of the blade root (4) up to a longitudinal position of the wind turbine rotor blade (1) at which the profile thickness of the wind turbine rotor blade (1) is at least 20 cm.

3. The wind turbine rotor blade (1) according to claim 1 or 2, **characterized in that** a second section (8) of the electrical line (10), which is arranged on the outer side of the wind turbine rotor blade (1), is made of a carbon fiber material (9), wherein a region of the second section (8) contacts the blade tip end (14) of the heating element (11).

4. The wind turbine rotor blade (1) according to claim 3, **characterized in that** a region of the second section (8) is led around the heating element (11), so that it contacts an underside and a top side of the heating element (11).

5. The wind turbine rotor blade (1) according to one of the claims 3 or 4, **characterized in that** the first section (7) and the second section (8) are formed by a continuous strip of material, which runs from the inner side to the outer side.

6. The wind turbine rotor blade (1) according to claim 3 to 5, **characterized in that** the second section (8) is redirected over an edge of one of the rotor blade half shells (2).

7. The wind turbine rotor blade (1) according to one of the claims 1 to 6, **characterized in that** the carbon fiber material (9) is embedded in a polymer matrix.

8. The wind turbine rotor blade (1) according to one of the claims 1 to 7, **characterized in that** the carbon fiber material (9) and/or the heating element (11) is coated with a protective layer.

9. The wind turbine rotor blade (1) according to one of the claims 1 to 8, **characterized in that** the first section (7) and/or the second section (8) is laminated or adhesively bonded to one of the rotor blade half shells (2).

10. The wind turbine rotor blade (1) according to one of the claims 3 to 9, **characterized in that** at least a second heating element (11) is arranged adjacent to the one heating element (11) on the outer side of the wind turbine rotor blade (1), so that the second section (8) contacts an underside and a top side of these two heating elements (11).

11. The wind turbine rotor blade (1) according to one of the claims 1 to 10, **characterized in that** the heating element or elements (11) has/have a higher ohmic resistance per length than the carbon fiber material (9).

12. The wind turbine rotor blade (1) according to one of the claims 1 to 4 or 7 to 11, **characterized in that** a metallic conductor, which interconnects the first section (7) and the second section (8), is arranged in a wall of one of the rotor blade half shells (2).

13. A method for producing a wind turbine rotor blade (1) having an electrical heating element (11), wherein the method comprises the following steps:
• producing a rotor blade half shell (2), which includes a fiber-reinforced plastics material,
• arranging an electrical line, which leads from an outer side of the rotor blade half shell (2) to a blade root (4), wherein at least a first section (7) of the electrical line is made of a flat carbon fiber material (9) and is arranged on an inner side of the rotor blade half shell (2),
• connecting the rotor blade half shell (2) to a further rotor blade half shell (2), which includes a fiber-reinforced plastics material,
• arranging an electrical heating element (11) on an outer side of the wind turbine rotor blade (1), wherein the heating element (11) has a blade root end (13) and a blade tip end (14),
• establishing an electrical contact between the blade tip end (14) of the heating element (11) and the electrical line.

14. The method according to claim 13, **characterized in that** the rotor blade half shell (2) is produced in a mold in a vacuum infusion process and the heating element (11) and/or the first section (7) is placed into the mold together with further fiber materials of the rotor blade half shells (2) and impregnated with a liquid plastics material.

15. The method according to claim 13, **characterized in that** the rotor blade half shell (2) is prefabricated in a vacuum infusion process and the heating element (11) and/or the first section (7) is placed onto one of the cured rotor blade half shells (2) and impregnated with a liquid plastics material.

## Revendications

1. Pale de rotor d'éolienne (1) comprenant une base de pale (4), une pointe de pale (3) et un élément chauffant électrique (11) agencé sur un côté extérieur de la pale de rotor d'éolienne (1) et présentant une extrémité côté base de pale (13) et une extrémité côté pointe de pale (14), **caractérisée par** deux demi-coques de pale de rotor (2) reliées entre elles, présentant une matière plastique renforcée de fibres, et en ce que l'extrémité côté pointe de pale (14) est raccordée par le biais d'une ligne électrique menant à la base de pale (4), une première section (7) de la ligne électrique (10) étant agencée sur un côté intérieur de l'une des demi-coques de pale de rotor (2) et constituée d'un matériau plat en fibres de carbone (9).

2. Pale de rotor d'éolienne (1) selon la revendication 1, **caractérisée en ce que** la première section (7) s'étend vers la base de pale (4) jusqu'à une position longitudinale de la pale de rotor d'éolienne (1), où l'épaisseur de profil de la pale de rotor d'éolienne (1) mesure au moins 20 cm.

3. Pale de rotor d'éolienne (1) selon la revendication 1 ou 2, **caractérisée en ce qu'**une deuxième section (8) de la ligne électrique (10) agencée sur le côté extérieur de la pale de rotor d'éolienne (1) est constituée d'un matériau en fibres de carbone (9), une région de la deuxième section (8) touchant l'extrémité côté pointe de pale (14) de l'élément chauffant (11).

4. Pale de rotor d'éolienne (1) selon la revendication 3, **caractérisée en ce qu'**une région de la deuxième section (8) est disposée autour de l'élément chauffant (11), de manière à toucher un côté inférieur et un côté supérieur de l'élément chauffant (11).

5. Pale de rotor d'éolienne (1) selon l'une des revendications 3 ou 4, **caractérisée en ce que** la première section (7) et la deuxième section (8) sont formées par une bande de matériau continue, qui s'étend du côté intérieur vers le côté extérieur.

6. Pale de rotor d'éolienne (1) selon l'une des revendications 3 à 5, **caractérisée en ce que** la deuxième section (8) est déviée autour d'un bord de l'une des demi-coques de pale de rotor (2).

7. Pale de rotor d'éolienne (1) selon l'une des revendications 1 à 6, **caractérisée en ce que** le matériau en fibres de carbone (9) est enrobé dans une matrice en plastique.

8. Pale de rotor d'éolienne (1) selon l'une des revendications 1 à 7, **caractérisée en ce que** le matériau en fibres de carbone (9) et/ou l'élément chauffant (11) est revêtu d'une couche de protection.

9. Pale de rotor d'éolienne (1) selon l'une des revendications 1 à 8, **caractérisée en ce que** la première section (7) et/ou la deuxième section (8) est laminé ou collé sur l'une des demi-coques de pale de rotor (2).

10. Pale de rotor d'éolienne (1) selon l'une des revendications 3 à 9, **caractérisée en ce qu'**au moins un deuxième élément chauffant (11) est agencé à côté du premier élément chauffant (11) sur le côté extérieur de la pale de rotor d'éolienne (1), de sorte que la deuxième section (8) touche un côté inférieur ou un côté supérieur de ces deux éléments chauffants (11).

11. Pale de rotor d'éolienne (1) selon l'une des revendications 1 à 10, **caractérisée en ce que** l'élément ou les éléments chauffants (11) présente/présentent une plus grande résistance ohmique que le matériau en fibres de carbone (9).

12. Pale de rotor d'éolienne (1) selon l'une des revendications 1 à 4 ou 7 à 11, **caractérisée en ce qu'**un conducteur métallique reliant la première section (7) et la deuxième section (8) est agencé dans une paroi de l'une des demi-coques de pale de rotor (2).

13. Procédé de fabrication d'une pale de rotor d'éolienne (1) comprenant un élément chauffant électrique (11), le procédé comportant les étapes suivantes :
• fabrication d'une demi-coque de pale de rotor (2) présentant une matière plastique renforcée de fibres,
• agencement d'une ligne électrique menant d'un côté extérieur de la demi-coque de pale de rotor (2) à une base de pale (4), au moins une première section (7) de la ligné électrique étant constituée d'un matériau plat en fibres de carbone (9) et agencé sur le côté intérieur de la demi-coque de pale de rotor (2),
• assemblage de la demi-coque de pale de rotor (2) avec une autre demi-coque de pale de rotor (2) présentant une matière plastique renforcée de fibres,
• agencement d'un élément chauffant électrique (11) sur un côté extérieur de la pale de rotor d'éolienne (1), l'élément chauffant (11) présentant une extrémité côté base de pale (13) et une extrémité côté pointe de pale (14),
• établissement d'un contact électrique entre l'extrémité côté pointe de pale (14) de l'élément chauffant (11) et la ligne électrique.

14. Procédé selon la revendication 13, **caractérisé en ce que** la demi-coque de pale de rotor (2) est fabriquée dans un moule au cours d'un procédé d'infusion sous vide, et l'élément chauffant (11) et/ou la première section (7) est placé dans le moule avec d'autres matières fibreuses des demi-coques de pale de rotor (2) et imprégné d'une matière plastique liquide.

15. Procédé selon la revendication 13, **caractérisé en ce que** la demi-coque de pale de rotor (2) est préfabriquée au cours d'un procédé d'infusion sous vide, et l'élément chauffant (11) et/ou la première section (7) est disposé sur l'une des demi-coques de pale de rotor (2) durcies et imprégné d'une matière plastique liquide.
